# NEUE EUROPÄISCHE PATENTSCHRIFT

(11) **EP 0 618 659 B2**
(45) Veröffentlichungstag und Bekanntmachung des Hinweises auf die Entscheidung über den Einspruch: **04.07.2001**
(45) Hinweis auf die Patenterteilung: 28.12.1994
(21) Anmeldenummer: 93105355.7
(22) Anmeldetag: 31.03.1993
(51) Int. Cl.: H02K 7/18, H02K 23/66, H02K 7/116, H02K 5/22

(54) **Kommutatormotor-Getriebe-Antriebseinheit, insbesondere Kraftfahrzeug-Fensterheberantrieb**
D.C. motor and gearbox drive unit, in particular for a motor vehicle window raising actuator
Unité d'entraînement à moteur-réducteur, en particulier pour lève-glace de véhicule à moteur

(43) Veröffentlichungstag der Anmeldung: 05.10.1994
(73) Patentinhaber: SIEMENS AKTIENGESELLSCHAFT, 80333 München (DE)
(72) Erfinder: Adam, Peter, W-8702 Höchberg (DE); Michel, Peter, W-8702 Kleinrinderfeld (DE); Fiedler, Rudolf, W-6990 Bad Mergentheim (DE)

(56) Entgegenhaltungen:
- EP-A- 0 474 904
- DE-A- 4 120 665
- DE-C- 2 618 537
- GB-A- 2 028 006
- GB-A- 2 079 540
- GB-A- 2 209 438

## Beschreibung

Die Erfindung bezieht auf eine Kommutatormotor-Getriebe-Antriebseinheit, insbesondere Kraftfahrzeug-Fensterheberantrieb, gemäß Anspruch 1.

Bei einer durch die EP-A1-0 474 904 bekannten Antriebseinheit ist die mit der Bürstenplatte integrierte Leiterplatte senkrecht zu der durch die Gehäuseflansche definierte Ebene in einer Erweiterung des topfförmigen Getriebegehäuses eingelegt, das durch einen senkrecht zu der durch die Gehäuseflansche definierten Ebene montierbaren Deckel nach außen dicht verschlossen wird; der auf der in das Getriebegehäuse verlängerten Rotorwelle des Kommutatormotors angeordnete Kommutator reicht axial über die Gehäuseflanschebene hinaus in das Getriebegehäuse hinein und wird dort von Bürsten beschliffen, die auf einem in das Getriebegehäuse ragenden Ansatz der Leiterplatte montiert sind.

Durch die GB-A-2 079 540 bzw. die prioritätsbegründende DE-A1-30 21 948, Fig. 4-8 ist eine elektrische Kommutator-Getriebe-Antriebseinheit, insbesondere für Scheibenwischer eines Kraftfahrzeuges, bekannt, bei der ein parallel zum Motorgehäuse verlaufendes Steckergehäuse eine im wesentlich parallel zu den stirnseitigen Gehäuseflanschen von Motorgehäuse und Getriebegehäuse verlaufende, Anschlußstecker aufnehmende Bodenplatte mit einstückiger. Bürsten aufnehmender Bürstenplatte aufweist; die Bodenplatte bzw. Bürstenplatte ragt randseitig radial zwischen die Stirnflansche von Motorgehäuse und Getriebegehäuse und ist zwischen diesen eingeklemmt und dadurch gehalten.

Die DE-C- 2 618 537 zeigt eine Kommutatormotor-Getriebe-Antriebseinheit, bei der eine Leiterplatte mit integrierter Bürstenplatte senkrecht zur Motorachse angeordnet ist.

Gemäß Aufgabe vorliegender Erfindung soll bei vereinfachter Fertigung und Montage eine kompaktere Bauweise einer mit einer nach außen geschützten Elektronik versehenen Antriebseinheit, insbesondere für einen Kraftfahrzeug-Fensterheberantrieb, geschaffen werden; die Lösung dieser Aufgabe gelingt durch die Lehre des Anspruchs 1; vorteilhafte Ausgestaltungen der Erfindung sind jeweils Gegenstand derUnteransprüche.

Die erfindungsgemäße Konstruktion einer Kommutatormotor-Getriebe-Antriebseinheit schafft eine in fertigungstechnisch vorteilhafter axialer Aufbaumontage fügbare Bauteileinheit, die mit ihrer in der Ebene der Gehäuseflansche untergebrachte und gleichzeitig beim Zusammenbau von Motorgehäuse einerseits und Getriebegehäuse andererseits innerhalb von diesen in geschützer Abdeckung montierbare Leiterplatte eine kornpakte und mit geringem Aufwand fertigbare und montierbare Antriebseinheit.

Zur geschützen Unterbringung von auf der Leiterplatte gehaltenen und kontaktierenden elektrischen bzw. elektronischen Bauelementen ist ein Elektronik-Gehäuse mit einem im wesentlichen der stirnseitigen Kontur des Gehäuseflansches des Kommutatormotors entsprechenden ersten Elektronik-Gehäuseteil und einem radial anschließenden, sich schalenförmig unterhalb des Motorgehäuses des Kommutatormotors erstreckenden und an seiner offenen, den Getriebeflansch zugewandten axialen Beschickungsseite für die Leiterplatte durch den entsprechend lediglich radial erweiterten Gehäuseflansch des Getriebegehäuses bei dessen Montage an das Motorgehäuse gleichzeitig verschließenden zweiten Elektronik-Gehäuseteil; im Schalenboden des zweiten Gehäuseteils ist dabei zweckmäßigerweise eine Steckeraufnahme mit einem abgedichtet nach außen führenden, mit Leiterführungen der Leiterplatte verbindbaren Stecker vorgesehen.

Zur Vereinfachung des Zusammenbaus der erfindungsgemäßen Kommutatormotor-Getriebe-Antriebseinheit ist weiterhin vorgesehen, die Leiterplatte entweder in dem zweiten Elektronik-Gehäuseteil bzw. in dem gegenüberliegenden Gehäuseflansch des Getriebegehäuses vorzumontieren, derart daß die Leiterplatte beim Zusammenbau von Motorgehäuse einerseits und Getriebegehäuse andererseits entweder mit dem zwischenliegenden Elektronikgehäuse oder mit dem Getriebegehäuse ohne gesonderte Handhabungbewegung für eine entsprechende Bauteil-Zuführung montierbar und nach dem Zusammenbau innerhalb von Motorgehäuse und Getriebegehäuse durch deren abgedichtetes stirnseitiges Voreinanderliegen geschützt gelagert ist.

Um beim Zusammenbau von Motorgehäuse einerseits und Getriebegehäuse andererseits eine quetschfreie dichte gegenseitige Anlage der Gehäusesflansche mit gleichzeitigem Zwischeneinschluß des Elektronikgehäuses erreichen zu können, ist nach einer Ausgestaltung der Erfindung auf die beiden stirnseitigen Anlageränder des Elektronikgehäuses, gegen die einerseits die Stirnseite des Gehäuseflansches des Motorgehäuses und andererseits die Stirnseite des Getriebeflansches des Getriebegehäuses anliegt, jeweils ein, insbesondere aufgespritzter, Dichtrand aufgebracht.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen
- FIG 1: in einem axialen Längsschnitt einen Teilausschnitt aus einem Kraftfahrzeug-Fensterheberantrieb im Bereich der zusammenmontierbaren Gehäuseflansche vom Motorgehäuse einerseits und Getriebegehäuse andererseits,
- FIG 2: eine axiale stirnseitige Draufsicht auf den Gehäuseflansch des Motorgehäuses,
- FIG 3: in einem axialen Längsschnitt das zwischen den Gehäuseflansche fixierbare Elektronikgehäuse, gemäß Schnittverlaut III-III in FIG 4,
- FIG 4: die axiale getriebegehäuseseitige stirnseitige Draufsicht auf das Elektronikgehäuse gemäß FIG 3,

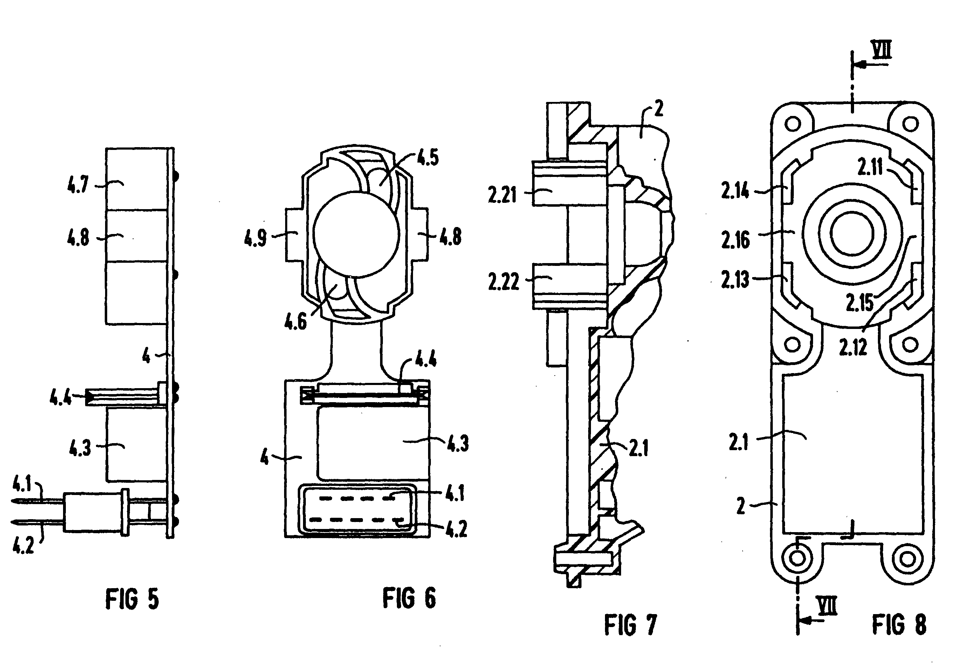

- FIG 5: in einer axialen Seiteneinsicht die bestückte Leiterplatte,
- FIG 6: die motoraehäuseseitige axiale stirnseitige Draufsicht auf die Leiterplatte gemäß FIG 5,
- FIG 7: in einem axialen Längsschnitt einen Teilausschnitt aus dem Getriebegehäuse im Bereich des Gehäuseflansches gemäß Schnittverlauf VII-VII in FIG 8,
- FIG 8: die motorgehäuseseitige axiale stirnseitige Draufsicht auf das Getriebegehäuse gemäß FIG 7.

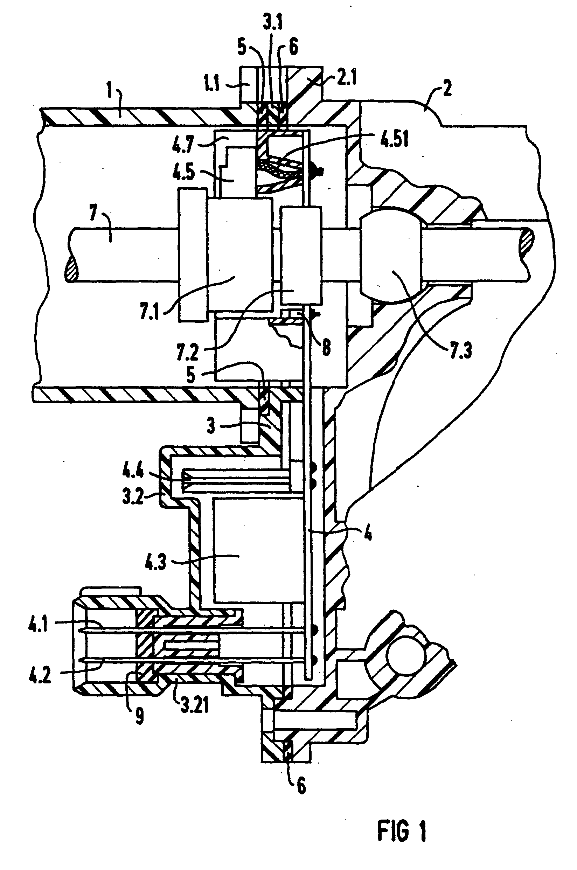

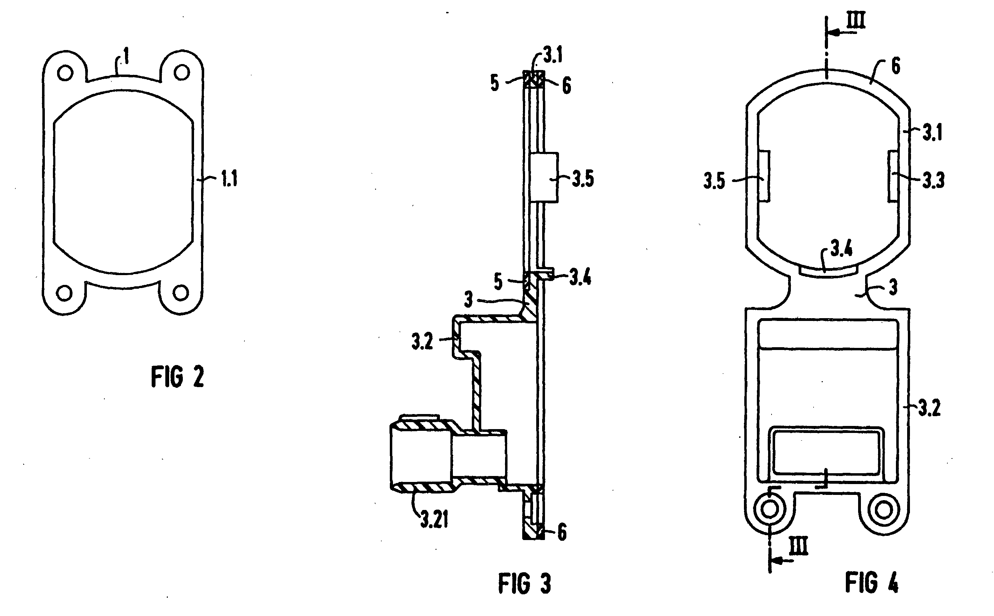

FIG 1 zeigt einen Kraftfahrzeug-Fensterheberantrieb mit einem Kunststoff-Motorgehäuse 1 und einem daran angeflanschten Kunststoff-Getriebegehäuse 2. Zur gegenseitigen Montage von Motorgehäuse 1 und Getriebegehäuse 2 weist das Motorgehäuse 1 einen Gehäuseflansch 1.1 und das Getriebegehäuse 2 einen Gehäuseflansch 2.1 auf, die mit radial überstehenden Gehäuseflanschrändern in hier nicht näher dargestellter Weise durch axiale Verschraubung gegeneinander verspannt sind. Zwischen den Gehäuseflanschen 1.1.;1.2 ist dabei ein Elektronikgehäuse 3 eingeklemmt, das für das Motorgehäuse 1 - wie insbes. aus FIG 3;4 ersichtlich - aus einem ersten, im wesentlichen nur einen Anlagerand aufweisenden ersten Elektronik-Gehäuseteil 3.1 und einem, im wesentlichen zur Aufnahme einer mit elektronischen bzw. elektrischen Bauteilen bestückten Leiterplatte 4 bzw. eine Steckeraufnahme aufweisenden Elektronik-Gehäuseteil 3.2 besteht.

Die Leiterplatte 4 ist in das Elektronikgehäuse 3 vormontierbar eingelegt, wobei im Bereich des ersten Elektronik-Gehäuseteils 3.1 von der dort als Bürstenplatte ausgebildeten Leiterplatte Bürsten 4.5;4.6 aufgenommen werden, die der Stromzuteilung zu einem Kommutator 7.1 dienen, der auf der Rotorwelle 7 des Kommutatormotors angeordnet ist; die u.a. in einem Kalottenlager 7.3 gelagerte Rotorwelle ragt als Schneckenwelle in das Getriebegehäuse 2.

In ihrem radial unteren Teil dient die Leiterplatte 4 im wesentlichen zur Aufnahme einer einsteckbaren Chipplatte 4.4, eines Relais 4.3; sowie von Steckerteilen 4.1;4.2, die abgedichtet durch eine Steckerdichtung 9 durch eine Steckeraufnahme 3.21 im zweiten Elektronik-Gehäuseteil 3.2 nach außen zum Anschluß eines Kundensteckers führen. Im oberen Teil der Leiterplatte 4 ist ein Hall-Sensor 8 angeordnet, der einem auf der Rotorwelle 3 gehaltenen Polrad 7.2 zugeordnet ist und als Drehzahl- bzw. Drehrichtungsgeber dient.

Sämtliche von der Leiterplatte 4 aufgenommenen und mit dieser bzw. untereinander zu kontaktierenden Bauteile, insbesondere die Steckerteile 4.1;4.2, das Relais 4.3, die Chipplatte 4.4, der Hall-Sensor 8 sowie zu den Bürsten führende Bürstenlitzen 4.51 sind in vorteilhafter Weise von der motorgehäuseseitigen Vorderseite der Leiterplatte 4 axial zuführbar montiert und durch Tauchlöten von durch die Leiterplatte 4 zu deren Rückseite durchgesteckten Kontaktstiften kontaktierbar.

Auf die beiden zwischen dem Motorgehäuse 1 und dem Getriebegehäuse 2 anlagerandseitig eingeklemmten Stirnseiten des Elektronikgehäuses 3 ist je ein Dichtrand 5 bzw. 6 derart aufgespritzt, daß einerseits der Gehäuseflansch 1.1 des Motorgehäuses 1 gegenüber dem einen Anlagerand des ersten Elektronik-Gehäuseteils 3.1 und andererseits der nach radial unten als Abdeckung fürdie offene Leiterplatten-Beschickungseite des Elektronikgehäuses 3 erweiterte Getriebeflansch 2.1 des Getriebegehäuses 2 gegen die Dichtung 6 des anderen stirnseitigen Anlagerandes des ersten Elektronikgehäuses 3.1 als auch des zweiten Elektronik-Gehäuseteils 3.2 dichtend anliegt und derart in vorteilhafter Weise die in Elektronikgehäuse 3 vormontierbare Leiterplatte 4 mit ingegrierter Bürstenplatte nach außen feuchtigkeitsdicht geschützt abgedeckt sind.

Das Elektronikgehäuse 3 stützt sich über Anlagestege 3.3;3.4;3.5 in solchem Abstand gegenüber dem Gehäuseflansch 2.1 des Getriebegehäuse 2 ab, daß ein hinreichender Abstand zur Rückseite der Leiterplatte 4 gegeben ist. Durch die abdeckende Ausbildung des Gehäuseflansches 2.1 des Getriebegehäuses 2 und die feuchtigkeitsdichte Lageraufnahme des Kalottenlagers 7.3 ist gewährleistet, daß auch keine Feuchtigkeit vom Getriebegehäuse 2 her in das Elektronikgehäuse 3 gelangen kann.

Zur Vereinfachung einer axialen Aufbaumontage sind in vorteilhafter Weise an den Gehäuseflansch 2.1 des Getriebegehäuses axial vorstehende Führungsstege 2.11-2.14 angeformt, die in korrespondierende stufenförmige Führungsaufnahmen der Leiterplatte 4 eintauchen; in gleicher Weise weist die Leiterplatte 4 in Gegenrichtung Führungsstege 4.8;4.9 auf, die in korrespondierende Führungsaufnahmen 2.15;2.16 des Gehäuseflansches 2.1 des Getriebegehäuses eintauchen. Eine an die Leiterplatte 4 angeformte Führungs- bzw. Abdeckhülse 4.7 deckt einerseits den Bürsten- und Kommutatorbereich des Kommutatormotors ab und dient gleichzeitig der Ausrichtung bzw. Fixierung der Leiterplatte 4 relativ zum Motorgehäuse 1.1 des Kommutatormotors.

Bei der erfindungsgemäß vorteilhaften axialen Aufbaumontage sämtlicher wesentlicher Bauteile werden zweckmäßigerweise mit nur einer Handhabungsrichtung das Motorgehäuse 1 mit sämtlichen Rotorbauteilen bestückt, dann das Elektronikgehäuse 3 mit vormontierter Leiterplatte 4 und schließlich das Getriebegehäuse 2 aufgelegt und durch gegenseitiges Verspannen von Motorgehäuse 1 und Getriebegehäuse 2 die kompakte Bauteileinheit zusammengefaßt und dabei die Leiterplatte 4 mit der Elektronik nach außen dicht abgedeckt.

## Patentansprüche

1. Kommutatormotor-Getriebe-Antriebseinheit, insbesondere Kraftfahrzeug-Fensterheberantrieb, enthaltend ein Motorgehäuse (1) mit einem stirnseitigen Gehäuseflansch (1.1), ein Getriebegehäuse (2) mit einem stirnseitigen Gehäuseflansch (2.1) und ein Elektronikgehäuse (3) mit einer Leiterplatte (4) mit integrierter Bürstenplatte für den Kommutatormotor mit folgenden Merkmalen:
a) Die Leiterplatte (4) liegt im wesentlichen parallel zu den stirnseitigen Gehäuseflanschen (1.1;2.1) radial und axial innerhalb von Motorgehäuse (1) und Getriebegehäuse(2);
b) die Leiterplatte (4) ist auf ihrer einen axialen Stirnseite durch das Motorgehäuse (1) und das Elektronikgehäuse (3) und auf ihrer anderen axialen Stirnseite durch das Getriebegehäuse (2) nach außen dicht abgeschlossen;
c) das Elektronik-Gehäuse (3) weist einen im wesentlichen der stirnseitigen Kontur des Gehäuseflansches (1.1) des Kommutatormotors entsprechenden ersten Elektronik-Gehäuseteil (3.1) und einen radial anschließenden, sich schalenförmig unterhalb des Motorgehäuses (1) des Kommutatormotors erstreckenden und an einer offenen axialen Beschickungseite durch den entsprechend radial erweiterten Gehäuseflansch (2.1) des Getriebegehäuses (2) verschließenden schalenförmigen zweiten Elektronik-Gehäuseteil (3.2) auf.

2. Antriebseinheit nach Anspruch 1, mit dem Merkmal:
d) Im Schalenboden des schalenförmigen zweiten Elektronik-Gehäuseteils (3.2) ist eine Steckeraufnahme (3.21) mit einem abgedichtet nach außen führenden, mit Leiterführungen der Leiterplatte (4) verbundenen Steckern (4.1;4.2) vorgesehen.

3. Antriebseinheit nach Anspruch 1 und/oder 2, mit dem Merkmal:
e) Die, insbesondere bereits mit sich in den schalenförmigen zweiten Elektronik-Gehauseteil (3.2) erstreckenden Elektronikbausteinen bzw. mit Bürsten bzw. mit Kontaktelementen und deren gegenseitigen Verbindungen bestückte, Leiterplatte (4) ist in dem Elektronikgehäuse (3) bzw. in dem gegenüberliegenden Gehäuseflansch (2.1) des Getriebegehäuses (2) vormontierbar bzw. fixierbar ausgebildet.

4. Antriebseinheit nach Anspruch 3, mit dem Merkmal:
f) Die Leiterplate (4) ist von der, vorzugsweise kommutatormotorseitigen, Vorderseite axial bestückbar und durch Tauchlöten von durch deren Rückseite durchgesteckten Kontaktstiften kontaktierbar ausgebildet.

5. Antriebseinheit nach einem der Ansprüche 1-4, mit dem Merkmal:
g) Es sind anlagerandseitig auf das Elektronikgehäuse (3) aufgebrachte, insbesondere aufgespritzte, Dichtränder (5;6) vorgesehen, gegen die der Gehäuseflansch (1.1) des Motorgehäuses (1) bzw. der Gehäuseflansch (2.1) des Getriebegehäuses (2) anliegt.

6. Antriebseinheit nach einem der Ansprüche 1-5, mit dem Merkmal:
h) An die Leiterplatte (4) ist eine, das Motorgehäuse (1) axial untergreifende und zumindest den Kommutatorbereich des Kommutatormotors axial übergreifende Führungs- und/oder Abdeckhülse (4.7) angeformt.

7. Antriebseinheit nach einem der Ansprüche 1-6, mit dem Merkmal:
i) An den Gehäuseflansch (2.1) des Getriebegehäuses (2) sind axial vorstehende Führungsstege (2.11;2.12;2.13; 2.14) angeformt, die in korrespondierende Führungsaufnahmen der Leiterplatte (4) axial eintauchen.

8. Antriebseinheit nach einem der Ansprüche 1-7, mit dem Merkmal:
j) An die Leiterplatte (4) sind axial vorstehende Führungsstege (4.8;4.9) angeformt, die in korrespondierende Führungsaufnahmen (2.15;2.16) des Gehäuseflansches (2.1) des Getriebegehäuses (2) axial eintauchen.

9. Antriebseinheit nach einem der Ansprüche 1-8, mit dem Merkmal:
k) Das Motorgehäuse(1), das Elektronikgehäuse (3), die Leiterplatte (4) sowie das Getriebegehäuse (2) sind Teile einer in axialer Aufbaumontage fügbaren Bauteileinheit.

## Claims

1. Commutator motor gear drive unit, especially motor vehicle window lift drive, including a motor housing (1) having a front-side housing flange (1.1), a gear housing (2) having a front-side housing flange (2.1) and an electronics housing (3) having a printed circuit board (4) with an integrated brush holder plate for the commutator motor, having the following features:
a) the printed circuit board (4) lies substantially parallel to the front-side housing flanges (1.1;2.1) radially and axially within motor housing (1) and gear housing (2);
b) the printed circuit board (4) is outwardly tightly sealed off on its one axial front side by the motor housing (1) and the electronics housing (3) and on its other axial front side by the gear housing (2).
c) the electronics housing (3) has a first electronics housing part (3.1) substantially corresponding to the front-side contour of the housing flange (1.1) of the commutator motor and a radially adjoining shell-shaped second electronics housing part (3.2) which extends in a shell shape below the motor housing (1) of the commutator motor and which is sealed at an open axial loading side by the correspondingly radially expanded housing flange (2.1) of the gear housing (2).

2. Drive unit according to Claim 1, having the feature:
d) in the shell floor of the shell-shaped second electronics housing part (3.2), there is provided a plug receptacle (3.21) with plugs (4.1;4.2) which lead to the outside in sealed fashion and which are connected to conductor leads of the printed circuit board (4).

3. Drive unit according to Claim 1 and/or 2, having the feature:
e) the printed circuit board (4), especially already planted with electronic components extending into the shell-shaped second electronics housing part (3.2) or with brushes or with contact elements and their mutual connections, is designed to be pre-assemblable or fixable in the electronics housing (3) or in the opposite housing flange (2.1) of the gear housing (2).

4. Drive unit according to Claim 3, having the feature:
f) the printed circuit board (4) is designed to be plantable axially from the front side, preferably on the commutator motor side, and to be contactable by dip-soldering of contact pins which are passed through its rear side.

5. Drive unit according to one of Claims 1-4, having the feature:
g) sealing rims (5;6), especially sprayed-on sealing rims, are provided, which are applied to the electronics housing (3) on the abutment rim side and against which the housing flange (1.1) of the motor housing (1) or the housing flange (2.1) of the gear housing (2) abuts.

6. Drive unit according to one of Claims 1-5, having the feature:
h) a guide and/or cover sleeve (4.7) which engages axially under the motor housing (1) and which engages axially over at least the commutator region of the commutator motor is shaped onto the printed circuit board (4).

7. Drive unit according to one of Claims 1-6, having the feature:
i) guide webs (2.11;2.12;2.13;2.14) projecting axially are shaped onto the housing flange (2.1) of the gear housing (2), which guide webs fit axially into corresponding guide receptacles of the printed circuit board (4).

8. Drive unit according to one of Claims 1-7, having the feature:
j) axially projecting guide webs (4.8;4.9) are shaped onto the printed circuit board (4), which guide webs fit axially into corresponding guide receptacles (2.15;2.16) of the housing flange (2.1) of the gear housing (2).

9. Drive unit according to one of Claims 1-8, having the feature:
k) the motor housing (1), the electronics housing (3), the printed circuit board (4) and the gear housing (2) are parts of a constructional unit which can be fitted in axial structural assembly.

## Revendications

1. Unité d'entraînement à moteur à collecteur et transmission, notamment dispositif d'entraînement de lève-glace de véhicule automobile, comportant un boîtier de moteur (1) comportant une bride frontale (1.1), un boîtier de transmission (2) comportant une bride frontale (2.1) et un boîtier d'électronique (3) comportant une carte à circuit imprimé (4) avec une plaque porte-balais intégrée pour le moteur à collecteur, présentant les caractéristiques suivantes :
a) la carte à circuit imprimé (4) est sensiblement parallèle aux brides frontales (1.1; 2.1) des boîtiers, et s'étend radialement et axialement à l'intérieur du boîtier (1) du moteur et du boîtier (2) de la transmission;
b) la carte à circuits imprimés (4) est fermée de façon étanche par rapport à l'extérieur, au niveau de sa face frontale axiale, par le boîtier (1) du moteur et le boîtier (3) de l'électronique, et sur son autre face frontale axiale, par le boîtier (2) de la transmission ;
c) le boîtier (3) de l'électronique comporte une première partie (3.1) qui correspond, pour l'essentiel, au contour frontal de la bride (1.1) du boîtier du moteur à collecteur, et une seconde partie (3.2) qui se raccorde radialement, s'étend en forme de coque au-dessous du boîtier (1) du moteur à collecteur et réalise une fermeture au niveau du côté axial cuvert d'alimentation, au moyen de la bride (2.1), qui s'élargit radialement de façon correspondante, du boîtier (2) de la transmission.

2. Unité d'entraînement suivant la revendication 1, présentant la caractéristique suivante :
d) dans le fond de la coque de la seconde partie (3.2) en forme de coque du boîtier de l'électronique est prévu un logement (3.21) comportant une fiche (4.1; 4.2) qui est guidée vers l'extérieur de manière étanche et est reliée à des guides de la carte à circuit imprimé (4).

3. Unité d'entraînement suivant l'une des revendications 1 ou 2, présentant la caractéristique suivante :
e) la carte à circuit imprimé (4), qui est notamment déjà équipée de modules électroniques, qui s'étendent dans la seconde partie (3.2) en forme de coque du boîtier de l'électronique, ou de balai et d'éléments de contact et de leurs liaisons réciproques, est agencée de manière à pouvoir être préalablement montée ou fixée dans le boîtier (3) de l'électronique ou dans la bride (2.1) opposée du boîtier (2) de la transmission.

4. Unité d'entraînement suivant la revendication 3, présentant la caractéristique suivante :
f) la carte à circuit imprimé (4) est agencée de manière à pouvoir être équipée axialement, au niveau de sa face avant, tournée de préférence du côté du moteur à collecteur, et de manière à pouvoir être amenée en contact par brasage par immersion, avec des broches de contact enfichées dans la face arrière de cette carte.

5. Unité d'entraînement suivant l'une des revendications 1 à 4, présentant la caractéristique suivante :
g) du côté du bord d'appui sont prévus des bords d'étanchéité (5;6), qui sont formés, notamment par moulage par injection, sur le boîtier (3) de l'électronique et contre lesquels s'appliquent la bride (1.1) du boîtier (1) du moteur cu la bride (2.1) du boîtier (2) de la transmission.

6. Unité d'entraînement suivant l'une des revendications 1 à 5, présentant la caractéristique suivante :
h) sur la carte à circuit imprimé (4) est formée, par moulage, une douille de guidage et/ou de recouvrement (4.7), qui s'engage axialement au-dessous du boîtier (1) du moteur et s'engage axialement au moins par-dessus la zone du collecteur du moteur à collecteur.

7. Unité d'entraînement suivant l'une des revendications 1 à 6, présentant la caractéristique suivante :
i) sur la bride (2.1) du boîtier (2) de la transmission sont formées, par moulage, des nervures de guidage (2.11; 2.12; 2.13; 2.14) qui font saillie axialement et qui pénètrent axialement dans des logements de guidage correspondants de la carte à circuits imprimés (4).

8. Unité d'entraînement suivant l'une des revendications 1 à 7, présentant la caractéristique suivante :
j) sur la carte à circuit imprimé (4) sont formées, par moulage, des nervures de guidage (4.8; 4.9), qui font saillie axialement et pénètrent axialement dans des logements de guidage (2.15; 2.16) correspondants de la bride (2.1) du boîtier (2) de la transmission.

9. Unité d'entraînement suivant l'une des revendications 1 à 8, présentant la caractéristique suivante :
k) le boîtier (1) du moteur, le boîtier (3) du système électronique, la carte à circuit imprimé (4) ainsi que le boîtier (2) de la transmission font partie d'une unité de composants pouvant être assemblée selon un montage axial.
